Europäisches Patentamt

European Patent Office

Office européen des brevets

(19)

(11) EP 1 296 478 A2

(12) DEMANDE DE BREVET EUROPEEN

(43) Date de publication:
26.03.2003 Bulletin 2003/13

(51) Int Cl.7: **H04L 9/30**, H04L 9/32,
H04N 7/24

(21) Numéro de dépôt: 02354138.6

(22) Date de dépôt: 10.09.2002

(84) Etats contractants désignés:
**AT BE BG CH CY CZ DE DK EE ES FI FR GB GR
IE IT LI LU MC NL PT SE SK TR**
Etats d'extension désignés:
**AL LT LV MK RO SI**

(30) Priorité: **10.09.2001 FR 0111676**

(71) Demandeur: **STMicroelectronics S.A.**
**92120 Montrouge (FR)**

(72) Inventeurs:
• **Wuidart, Luc**
**83910 Pourrieres (FR)**
• **Balthazar, Pierre**
**13100 Aix en Provence (FR)**

(74) Mandataire: **de Beaumont, Michel**
**Cabinet Michel de Beaumont**
**1, rue Champollion**
**38000 Grenoble (FR)**

(54) **Procédé sécurisé de transmission de données multimédia**

(57)   L'invention concerne un procédé et un système sécurisé de transmission de données numériques (DATA) entre un émetteur et un récepteur, comprenant une phase d'authentification du récepteur par un algorithme symétrique à partage de clé d'authentification ($K_A$, $K_B$) sans transmission de celle-ci, une phase de marquage (WM) des données en utilisant la clé d'authentification comme clé de marquage, et une phase de transmission des données marquées (WD).

Fig 3

EP 1 296 478 A2

## Description

La présente invention concerne la transmission de données multimédia, par exemple, des images animées ou non ou des séquences audio sous forme numérique. L'invention concerne plus particulièrement la transmission de fichiers de données sécurisés par insertion de codes ou messages binaires d'identification ou d'authentification. La technique d'insertion de codes binaires dans des images numériques ou, plus généralement, dans des fichiers de données est connue par son appellation anglo-saxonne "watermarking" et a connu un développement récent avec l'essor des transmissions notamment par internet. Cette technique permet non seulement de protéger des contenus multimédia numériques contre d'éventuelles copies illicites mais également de préserver ces contenus multimédia contre d'éventuelles tentatives de falsification durant une transmission (truquage d'image ou analogue).

Un exemple d'application de la présente invention est la transmission d'images numérisées (photos numériques ou séquences vidéo numérisées) entre un élément de prise de vues (par exemple, un appareil photo ou une caméra d'un journaliste) et un système distant (par exemple, une agence de presse ou les studios d'une chaîne de télédiffusion).

Dans ce genre d'application, on a besoin d'une double sécurité (bidirectionnelle). Tout d'abord, l'élément de prise de vues distant doit pouvoir s'assurer de l'identité du récepteur avant d'entamer la transmission. Ensuite, l'élément récepteur doit quant à lui pouvoir s'assurer de la provenance des images numériques qu'il reçoit avant de les diffuser. Il doit également pouvoir s'assurer qu'elles n'ont pas été modifiées (truquées) depuis leur émission.

En pratique, l'appareil de prise de vues (caméra ou appareil photo) numérique est généralement connecté à un ordinateur équipé d'un modem afin de transmettre les fichiers images et/ou sonores par un réseau de transmission public (téléphonique ou internet). Côté récepteur, celui-ci dispose également d'un modem pour recevoir les fichiers de données et de moyens applicatifs nécessaires à leur exploitation.

Classiquement, l'émetteur insère un code ou message binaire dans les images avant de les transmettre. On utilise généralement un algorithme, dit de marquage, pour coder ou positionner dans les images les messages à y insérer. Ce marquage s'effectue généralement de façon imperceptible à l'oeil humain. Un algorithme de lecture ou d'extraction est utilisé côté récepteur pour restituer les messages constitués, selon l'application, de codes d'identification ou d'authentification, ou de caractéristiques de prise de vues, etc.

Dans le cas de séquences animées, toutes les images ou une partie de celles-ci comportent alors une insertion (par exemple, un code d'identification de l'auteur est reproduit dans toutes les images ou dans une partie de celles-ci). Dans cet exemple, il est par ailleurs possible que le contenu des codes respectifs soit lié à la séquence afin de détecter une éventuelle insertion ou suppression d'image.

Généralement, les algorithmes de marquage modifient soit certains pixels de l'image, soit certains coefficients d'une transformée d'image (transformée de Fourier, transformée en cosinus discret, etc.). Les pixels ou coefficients à modifier sont sélectionnés en utilisant une clé de marquage propre à l'utilisateur (le codeur). Les modifications sont, par exemple, une inversion de couples de coefficients pour que leur valeur respecte une relation dépendant de la valeur du bit à cacher, ou un simple ajout du message à cacher préalablement modulé par un bruit blanc gaussien. Dans certains cas, le marquage modifie de façon visible l'image d'origine.

Sans disposer de la clé de marquage, l'élément récepteur ne peut pas récupérer le message. De plus, si l'image est modifiée de façon visible par le marquage, il ne peut alors même pas récupérer l'image d'origine. En outre, s'il dispose de la clé, il peut détecter que l'image qu'il reçoit a un fort risque d'avoir été falsifiée s'il ne retrouve pas le message attendu.

Un inconvénient des procédés de transmission classiques est que l'émetteur n'est pas en mesure de s'assurer, avant la transmission, qu'il est bien en communication avec un récepteur donné. En effet, un récepteur pirate peut se faire passer pour le destinataire des images ou intercepter une transmission qui ne lui est pas destinée.

Le document US-A-5 544 245 décrit un exemple de système de fourniture d'une clé d'authentification mutuelle basée sur un chiffrement symétrique. Le but poursuivi par ce document est d'obtenir une clé commune côté émetteur et côté récepteur. Ce document ne se préoccupe que de la fourniture d'une clé d'authentification ou de chiffrement et non d'un marquage de données à transmettre d'un émetteur vers un récepteur.

La présente invention vise à proposer un procédé sécurisé de transmission de données numériques multimédia qui pallie les problèmes des solutions classiques. L'invention vise, en particulier, à s'assurer de l'authenticité de l'origine des données.

Plus généralement, l'invention vise à proposer un tel procédé qui s'applique à tout fichier de données numériques susceptible d'être codé par insertion de message(s) au moyen d'un algorithme de marquage. La présente invention s'applique plus particulièrement aux algorithmes de marquage symétriques, c'est-à-dire dont la clé de marquage est identique à la clé de lecture, décodage ou extraction.

L'invention vise également à proposer un procédé qui minimise le nombre d'échanges de codes ou de données participant à l'authentification mutuelle entre l'émetteur et le récepteur.

L'invention vise également à ne pas nécessiter de modifications matérielles des récepteurs de fichiers numériques et à pouvoir être mise en oeuvre avec des algorithmes et des moyens logiciels classiques.

Pour atteindre ces objets et d'autres, la présente invention prévoit un procédé sécurisé de transmission de données numériques entre un émetteur et un récepteur, comprenant les phases suivantes :

une phase d'authentification du récepteur par un algorithme symétrique à partage de clé d'authentification sans transmission de celle-ci ;
une phase de marquage des données en utilisant la clé d'authentification comme clé de marquage ; et
une phase de transmission des données marquées.

Selon un mode de mise en oeuvre de la présente invention, la phase de marquage consiste à insérer un message dans les données.

Selon un mode de mise en oeuvre de la présente invention, la phase de marquage comporte les étapes suivantes :

tirage, par le récepteur, d'un nombre aléatoire et transmission de ce nombre vers l'émetteur ; et
marquage des données par l'émetteur en utilisant ledit nombre aléatoire comme message à insérer et la clé d'authentification comme clé de marquage.

Selon un mode de mise en oeuvre de la présente invention, en réception, on effectue les étapes suivantes :

décodage des données en utilisant la clé d'authentification afin d'extraire un message ; et
vérification d'identité entre le message extrait et ledit nombre aléatoire.

Selon un mode de mise en oeuvre de la présente invention, la phase de marquage comprend une étape de marquage des données par l'émetteur en utilisant la clé d'authentification et une quantité quelconque comme message à insérer.

Selon un mode de mise en oeuvre de la présente invention, en réception, le récepteur décode les données en utilisant la clé d'authentification, l'obtention ou non d'un message suite à ce décodage signifiant une transmission authentique ou non.

Selon un mode de mise en oeuvre de la présente invention, la phase d'authentification comporte les étapes suivantes :

transmission, de l'émetteur vers le récepteur, au moins d'un nombre aléatoire et d'un identifiant de l'émetteur ;
calcul de la clé d'authentification par le récepteur à partir au moins de l'identifiant de l'émetteur et d'une quantité secrète du récepteur ;
transmission, du récepteur vers l'émetteur, au moins d'un identifiant du récepteur et d'une grandeur représentant ledit nombre aléatoire, crypté avec la clé d'authentification calculée par le récepteur ; et
calcul de la clé d'authentification par l'émetteur à partir au moins de l'identifiant du récepteur et d'une quantité secrète de l'émetteur.

Selon un mode de mise en oeuvre de la présente invention, l'étape de calcul de la clé d'authentification par l'émetteur est suivie des étapes suivantes :

calcul d'une deuxième grandeur représentant ledit nombre aléatoire, crypté avec la clé d'authentification calculée par l'émetteur ; et
vérification d'identité entre les première et deuxième grandeurs cryptées.

Selon un mode de mise en oeuvre de la présente invention, les données numériques sont des données multimédia.

L'invention prévoit également un émetteur de données numériques multimédia.

L'invention prévoit également un récepteur de données numériques multimédia.

L'invention prévoit en outre un système de transmission de données numériques multimédia.

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :

la figure 1 représente, de façon très schématique, un premier exemple d'application du procédé sécurisé de transmission de données selon la présente invention ;

la figure 2 représente, de façon très schématique, un deuxième exemple d'application du procédé sécurisé de transmission de données selon la présente invention ; et

la figure 3 illustre, par un organigramme schématique, un mode de mise en oeuvre du procédé sécurisé de transmission de données selon l'invention.

Pour des raisons de clarté, seules les étapes de procédé et les éléments du système qui sont nécessaires à la compréhension de l'invention ont été représentés aux figures et seront décrits par la suite. En particulier, les étapes de marquage proprement dit des fichiers de données numériques n'ont pas été détaillées et ne font pas l'objet de la présente invention.

Une caractéristique de la présente invention est de prévoir, avant la transmission des données, une phase d'authentification du récepteur et, une fois celui-ci authentifié, de marquer les fichiers de données en appliquant un algorithme de marquage utilisant la clé de l'authentification précédente. Ainsi, selon la présente invention, la clé qui est déterminée lors de l'authentification est la même que celle utilisée pour marquer les données numériques (l'image) par insertion d'un message ou, plus généralement, pour chiffrer ou coder les données numériques.

L'invention s'applique plus particulièrement à un algorithme d'authentification symétrique, c'est-à-dire à partage de clé sans transmission de celle-ci. Un exemple d'algorithme symétrique qui pourra être choisi pour la mise en oeuvre de l'invention est décrit dans le document FR-A- 2 716 058.

Selon l'invention, le procédé de transmission fait en outre intervenir une donnée secrète propre à l'émetteur (par exemple, l'appareil d'enregistrement d'images). Selon un mode de réalisation préféré, cette donnée secrète est une donnée physique issue, par exemple, d'un réseau de paramètres physiques propre à l'appareil émetteur. Un tel réseau de paramètres physiques est connu et permet de délivrer un code binaire constituant une clé secrète côté émetteur et qui se trouve à demeure dans un circuit intégré sans pour autant être dans une mémoire lisible.

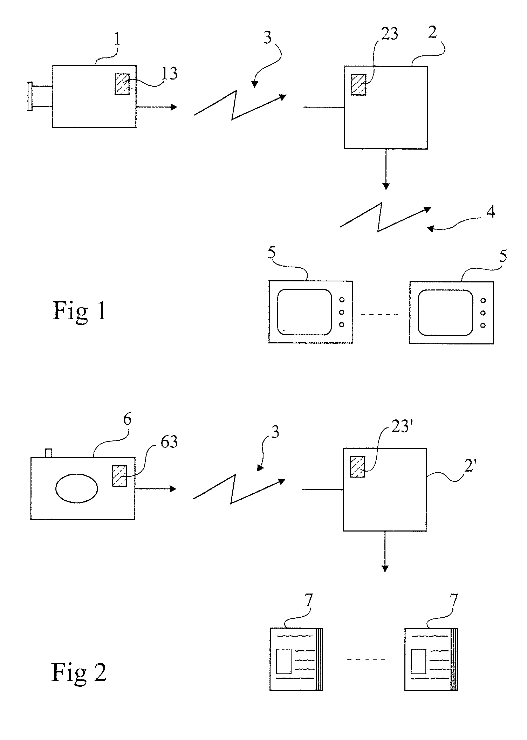

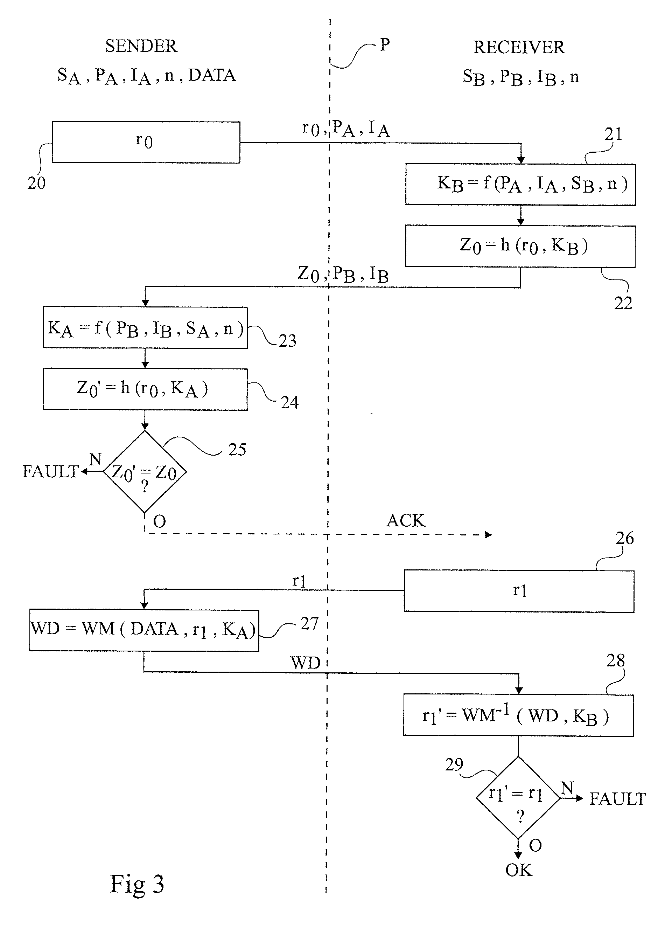

La figure 1 représente un premier exemple d'application d'un procédé de transmission sécurisée de données selon l'invention. Selon cet exemple, une caméra 1 de prise de vues constitue l'appareil émetteur. Cette caméra 1 est alors pourvue d'un dispositif d'insertion de message (marquage) 13 des données selon l'invention. Ce dispositif fait par exemple appel à un réseau de paramètres physiques pour extraire une clé secrète qui sera utilisée dans le procédé décrit par la suite en relation avec la figure 3. La caméra 1 communique avec un récepteur 2 par un système de transmission 3 quelconque (par exemple, le réseau internet). Le récepteur 2 comporte de son côté également un dispositif 23 selon l'invention propre à décoder les images provenant de la caméra 3. Le récepteur 2 est, par exemple, un système de diffusion télévisée et réémet donc les images qu'il reçoit de la caméra 1, par exemple par voie hertzienne 4 ou par câble, vers des récepteurs de télévision distants 5.

En variante, la caméra de prise de vues est une caméra classique, et on utilise un terminal informatique particulier pour transmettre les données. Il s'agira par exemple d'un micro-ordinateur pourvu d'un lecteur de cartes à puce permettant à l'utilisateur de s'identifier au moyen d'une carte introduite dans le lecteur. La carte constitue alors le dispositif 13 de l'invention. Selon une autre variante, l'identifiant est lié au terminal qui constitue le dispositif 13 de l'invention.

La figure 2 représente un deuxième exemple d'application de l'invention. Dans cet exemple, l'émetteur est un appareil numérique de photographie 6 pourvu d'un dispositif 63 selon l'invention de marquage des images à transmettre. Ces images sont, comme dans le premier exemple, transmises par n'importe quel réseau classique adapté 3 vers un récepteur 2'. Le récepteur 2' est ici, par exemple, le système informatique d'une agence de presse et possède également un dispositif 23' lui permettant de mettre en oeuvre le procédé de l'invention et notamment de décoder les données pour extraire le message inséré dans l'image à l'émission. Les photos reçues sont ensuite, par exemple, retransmises vers des éditeurs pour être diffusées sous forme de publications imprimées 7.

Comme pour le premier exemple, on peut prévoir une variante selon laquelle les images numériques prises par l'appareil 6 sont transférées vers un moyen de stockage temporaire physique (par exemple, une mémoire flash, une disquette ou un CD-ROM) pour être lues par un ordinateur de transmission qui marque alors les données grâce à un système d'authentification de l'utilisateur (par exemple, une carte à puce ou une identification logicielle).

On notera toutefois qu'un marquage des données directement dans l'appareil de prise de vues constitue un mode de réalisation préféré en raison de la sécurité supplémentaire qu'il apporte, par rapport aux variantes utilisant un terminal distinct.

Bien que l'on ait fait référence ci-dessus à des dispositifs de décryptage 23 et 23' matériels, il pourra également s'agir de moyens logiciels programmés sur les systèmes informatiques de réception des données.

La figure 3 illustre, par un organigramme schématique, un mode de mise en oeuvre du procédé sécurisé de transmission selon l'invention. En figure 3, on a représenté à gauche d'un pointillé P, les étapes mises en oeuvre côté émetteur (SENDER) et à droite du pointillé P les étapes mises en oeuvre côté récepteur (RECEIVER).

Selon le mode de réalisation illustré par la figure 3, on met en oeuvre un algorithme d'authentification symétrique, c'est-à-dire à partage de clé sans transmission de celle-ci.

Côté émetteur, les données binaires connues (ou contenues dans l'émetteur) sont une clé secrète $S_A$, un certificat $P_A$, un identifiant de l'émetteur $I_A$, un nombre entier n représentant le modulo des différentes opérations mises en oeuvre par l'algorithme, et bien entendu, les données numériques DATA constituant l'image (ou les images) à transmettre. La clé secrète de l'émetteur peut être enregistrée dans une mémoire non-volatile de cet émetteur, être saisie au clavier par un utilisateur, ou provenir d'un dispositif séparé, par exemple une carte à puce, ou encore être contenue dans un réseau de paramètres physiques associé à un circuit intégré de l'émetteur. Le certificat correspond à une quantité fournie par un dispositif externe généralement appelé "tiers de confiance". Dans une phase de personnalisation, l'émetteur calcule une clé publique qu'il transmet, avec son identifiant à un "tiers de confiance". Ce dernier calcule un certificat qu'il renvoie à l'émetteur qui le stocke. Par la suite, en phase d'utilisation, l'émetteur communique au récepteur son identifiant et le certificat. Le récepteur recalcule la clé publique de l'émetteur à partir de ces deux valeurs et d'une clé publique du "tiers de confiance". Un exemple d'obtention de certificat est décrit dans le document FR-A-2 716 058 déjà mentionné.

Côté récepteur, celui-ci contient comme données numériques, une clé secrète $S_B$, un certificat $P_B$, un identifiant $I_B$, et le nombre entier n représentant le modulo de l'algorithme. Le certificat du récepteur est obtenu de façon analogue à l'obtention du certificat de l'émetteur.

Selon un premier exemple de mise en oeuvre, les certificats $P_A$ et $P_B$ sont des données numériques contenues dans des mémoires respectives de l'émetteur et du récepteur.

Selon un autre exemple préféré, on utilise un algorithme d'authentification symétrique, dit à clés privées et publiques. Il s'agira par exemple, d'un algorithme connu sous le nom RSA, tel que celui décrit dans le document US-A-4 405 829.

Dans une première étape (suivant l'éventuelle personnalisation des certificats $P_A$ et $P_B$ au moyen d'un tiers de confiance), l'émetteur effectue le tirage d'un nombre aléatoire r0 (bloc 20) et transmet, au récepteur, ce nombre r0 ainsi que son certificat $P_A$ et son identifiant $I_A$.

Le récepteur calcule alors (bloc 21) une clé $K_B$ en mettant en oeuvre une fonction f correspondant à l'algorithme d'authentification à partir des données $P_A$, $I_A$, $S_B$ et n. En reprenant l'exemple de l'algorithme RSA, la fonction calculée est :

$$K_B = (P_A{}^e + I_A)^S B \bmod n, \text{ où e représente une clé publique (fournie par le tiers de confiance).}$$

Le récepteur calcule ensuite (bloc 22) une donnée z0 en mettant en oeuvre un algorithme symétrique de cryptage réalisant une fonction h avec, comme opérandes, le nombre r0 reçu de l'émetteur et la clé $K_B$ qu'il vient de calculer.

Selon un exemple particulier de réalisation, l'algorithme de cryptage est un algorithme symétrique connu sous la dénomination DES (Data Encryption Standard). Un exemple de cet algorithme est décrit dans l'ouvrage "Applied Cryptography" de B. Schneier, édité par Wiley en 1996, pages 265 à 301.

La donnée z0 est alors transmise, avec le certificat $P_B$ et l'identifiant $I_B$ du récepteur, vers l'émetteur. Ce dernier calcule (bloc 23), à partir des données $P_B$, $I_B$, $S_A$ et n, une clé $K_A$ en mettant en oeuvre la fonction f de l'algorithme d'authentification. En reprenant l'exemple d'un algorithme RSA, la relation appliquée est :

$$K_A = (P_B{}^e + I_B)^S A \bmod n.$$

Si l'authentification est positive, les clés $K_A$ et $K_B$ sont identiques. On note cependant que ces clés ne transitent jamais en clair entre les deux éléments.

L'étape suivante consiste à faire calculer, par l'émetteur (bloc 24), une donnée z0' à partir de la quantité r0 et de la clé $K_A$, en mettant en oeuvre la fonction h de cryptage (par exemple, l'algorithme DES indiqué ci-dessus). Comme les clés $K_A$ et $K_B$ sont identiques, on doit obtenir une même grandeur z'0 que la donnée z0 qui a été transmise par le récepteur.

On exécute un test (bloc 25, z'0 = z0 ?) d'identité côté émetteur. Si le test donne un résultat négatif, cela signifie une absence d'authentification du récepteur et le processus de transmission s'arrête (se met en erreur, FAULT). Par contre, si le résultat de la comparaison est positif, le procédé de transmission peut se poursuivre.

En variante, l'étape 24 est remplacée par l'exécution de la fonction inverse $h^{-1}$ de cryptage sur la grandeur z0 avec la clé $K_A$. Le test de l'étape 25 consiste alors à vérifier l'identité entre la quantité r0 et le résultat de l'étape 24.

Selon le mode de réalisation exposé par la figure 3, l'émetteur envoie alors au récepteur un signal ACK indicateur d'une authentification valable. Le récepteur effectue alors (bloc 26) le tirage d'une quantité aléatoire r1 qu'il transmet à l'émetteur. A partir de la clé $K_A$ qu'il a calculée précédemment, l'émetteur insère (bloc 27), en guise de message dans les données DATA de l'image, la quantité r1 en mettant en oeuvre un algorithme de marquage WM et obtient un fichier de données marqué WD.

Selon une variante de réalisation, la donnée aléatoire r1 peut être tirée antérieurement par le récepteur et être transmis par celui-ci en même temps que les données z0, $P_B$ et $I_B$ lors de la phase d'authentification. Dans ce cas, le signal d'accord ACK de l'émetteur n'a pas besoin d'être transmis au récepteur. L'émetteur poursuit simplement le procédé par la phase de marquage dans le cas où l'authentification du test 25 est positive.

Le fichier WD de données marqué par la donnée r1 en utilisant la clé $K_A$ est transmis au récepteur. Il reste alors à celui-ci à décoder les données.

Pour cela et selon l'invention, le récepteur extrait, de l'image reçue, le message ou code binaire qui a été inclus, en appliquant (bloc 28) la fonction de lecture ou d'extraction $WM^{-1}$ à l'image WD et en utilisant la clé $K_B$.

Si l'image correspond bien à celle envoyée par l'émetteur, la grandeur r1' doit être égale à la grandeur aléatoire r1 tirée à l'étape 26 par le récepteur. Celui-ci effectue donc préférentiellement un test (bloc 29) d'identité de ces grandeurs (r1' = r1 ?). Dans la négative, le récepteur sait que l'image risque d'avoir été falsifiée et prend les mesures appropriées (FAULT). Si l'identité est respectée, le processus classique d'exploitation normale des données reçues qui ne fait pas l'objet de l'invention est poursuivi (OK).

On notera que, pour l'application de l'invention, ce qui est important, c'est que le récepteur sache si l'image a été modifiée. Par conséquent, il n'est pas gênant de transmettre en clair (non crypté) la quantité aléatoire r1 servant au marquage du fichier image.

Un autre avantage de la présente invention est que le lien effectué entre la phase d'authentification déterminant les clés $K_A$ et $K_B$ et le marquage des fichiers garantit que le récepteur s'aperçoive d'une violation de la transmission. On peut également considérer que l'algorithme de marquage est utilisé pour transporter l'authentification de l'émetteur vers le récepteur, et on évite ainsi une étape d'authentification supplémentaire.

Selon l'invention, il est important que le procédé de transmission soit initié par l'émetteur par l'envoi de la quantité aléatoire r0. En effet, on aurait pu penser provoquer l'authentification par le récepteur et faire transmettre immédiatement, avec la clé extraite, l'image marquée par l'émetteur. Cela permettrait au récepteur, s'il retrouve la clé symétrique, de vérifier la concordance du nombre aléatoire tiré et d'être sûr de l'origine de la photo. Toutefois, cela n'offrirait pas de garantie à l'émetteur qu'il ait expédié l'image au récepteur prévu. En effet, celui-ci ne peut pas être sûr que la quantité aléatoire r0 et les données (certificat et identifiant) qu'il reçoit viennent bien du récepteur attendu (un pirate peut envoyer les certificat et identifiant que s'attend à recevoir l'émetteur).

Un autre avantage de l'invention est que le marquage de l'image peut s'accompagner d'un test d'intégrité de celle-ci afin de rendre impossible toute action de modification sur cette donnée. Cette variante est toutefois optionnelle.

Le mode de mise en oeuvre décrit en relation avec la figure 3 concerne l'utilisation d'un algorithme de marquage symétrique. Selon une variante, appliquée à des algorithmes de marquage dits évolués qui permettent de se passer de l'envoi d'un nombre aléatoire (r1) par le récepteur, ce nombre aléatoire est tiré par l'émetteur ou celui-ci utilise n'importe quelle donnée de marquage pourvu de respecter l'utilisation de la clé $K_A$ dans l'algorithme de marquage. Côté récepteur, on lit le fichier reçu en utilisant la clé $K_B$ comme clé de décodage. Si on récupère un marquage quelconque (aléa ou donnée choisie côté émetteur), même inconnu, cela signifie une transmission authentique. Si la clé utilisée $K_B$ n'est pas la bonne, le récepteur est incapable de récupérer un marquage quelconque. C'est ici une propriété des algorithmes dits évolués tels que celui décrit, par exemple, dans le document WO-A-99 45696.

Bien entendu, la présente invention est susceptible de diverses variantes et modifications qui apparaîtront à l'homme de l'art. En particulier, n'importe quel algorithme d'authentification symétrique pourra être utilisé dans la première phase du procédé de l'invention pourvu que la clé partagée, mais non transmise, déterminée de chaque côté (émetteur et récepteur) puisse être par la suite utilisée comme clé par l'algorithme de marquage de l'image ou du fichier de données.

De plus, l'invention pourra indifféremment être mise en oeuvre par des moyens matériels ou logiciels, sa réalisation pratique étant à la portée de l'homme du métier à partir des indications fonctionnelles données ci-dessus.

Enfin, bien que l'invention ait été décrite en relation avec une application à la transmission d'images, elle s'applique à toute transmission de données numériques que l'on souhaite sécuriser au moyen d'un algorithme de marquage par insertion ou inclusion d'une quantité numérique (r1) avec une clef.

En outre, l'invention permet, avec des algorithmes de marquage symétriques, d'obtenir le même niveau de sécurité qu'avec des algorithmes asymétriques dans lesquels la clé de lecture est une quantité publique et est différente de la clé de marquage qui est une quantité secrète.

## Revendications

1. Procédé sécurisé de transmission de données numériques (DATA) entre un émetteur (1, 6) et un récepteur (2, 2'), **caractérisé en ce qu'**il comprend les phases suivantes :

   une phase d'authentification du récepteur par un algorithme symétrique à partage de clé d'authentification

($K_A$, $K_B$) sans transmission de celle-ci ;
une phase de marquage (WM) des données en utilisant la clé d'authentification comme clé de marquage ; et
une phase de transmission des données marquées (WD).

2. Procédé selon la revendication 1, **caractérisé en ce que** la phase de marquage consiste à insérer un message (r1) dans les données.

3. Procédé selon la revendication 2, **caractérisé en ce que** la phase de marquage comporte les étapes suivantes :

tirage, par le récepteur (2, 2'), d'un nombre aléatoire (r1) et transmission de ce nombre vers l'émetteur (1, 6) ; et
marquage des données (DATA) par l'émetteur en utilisant ledit nombre aléatoire comme message à insérer et la clé d'authentification ($K_A$) comme clé de marquage.

4. Procédé selon la revendication 3, **caractérisé en ce qu'**il comprend, en réception, les étapes suivantes :

décodage des données en utilisant la clé d'authentification ($K_B$) afin d'extraire un message (r1') ; et
vérification d'identité entre le message extrait et ledit nombre aléatoire (r1).

5. Procédé selon la revendication 2, **caractérisé en ce que** la phase de marquage comprend les étapes suivantes :

marquage des données (DATA) par l'émetteur en utilisant la clé d'authentification ($K_A$) et une quantité quelconque comme message à insérer.

6. Procédé selon la revendication 5, **caractérisé en ce que**, en réception, le récepteur (2, 2') décode les données en utilisant la clé d'authentification ($K_B$), l'obtention ou non d'un message suite à ce décodage signifiant une transmission authentique ou non.

7. Procédé selon l'une quelconque des revendications 1 à 6, **caractérisé en ce que** la phase d'authentification comporte les étapes suivantes :

transmission, de l'émetteur (1, 6) vers le récepteur (2, 2'), au moins d'un nombre aléatoire (r0) et d'un identifiant ($I_A$) de l'émetteur ;
calcul de la clé d'authentification ($K_B$) par le récepteur à partir au moins de l'identifiant de l'émetteur ($I_A$) et d'une quantité secrète ($S_B$) du récepteur ;
transmission, du récepteur vers l'émetteur, au moins d'un identifiant ($I_B$) du récepteur et d'une grandeur (z0) représentant ledit nombre aléatoire (r0), crypté avec la clé d'authentification ($K_B$) calculée par le récepteur ; et
calcul de la clé d'authentification ($K_A$) par l'émetteur à partir au moins de l'identifiant ($I_B$) du récepteur et d'une quantité secrète ($S_B$) de l'émetteur.

8. Procédé selon la revendication 7, **caractérisé en ce que** l'étape de calcul de la clé d'authentification ($K_A$) par l'émetteur est suivie des étapes suivantes :

calcul d'une deuxième grandeur (z0') représentant ledit nombre aléatoire (r0), crypté avec la clé d'authentification ($K_A$) calculée par l'émetteur ; et
vérification d'identité entre les première et deuxième grandeurs cryptées (z0, z0').

9. Procédé selon l'une quelconque des revendications 1 à 8, **caractérisé en ce que** les données numériques sont des données multimédia.

10. Émetteur de données numériques multimédia (DATA), **caractérisé en ce qu'**il comporte des moyens pour la mise en oeuvre du procédé selon la revendication 9.

11. Récepteur de données numériques multimédia (DATA), **caractérisé en ce qu'**il comporte des moyens pour la mise en oeuvre du procédé selon la revendication 9.

12. Système de transmission de données numériques multimédia, **caractérisé en ce qu'**il comporte des moyens pour la mise en oeuvre du procédé selon la revendication 9.

Fig 1

Fig 2

SENDER

$S_A, P_A, I_A, n, DATA$

RECEIVER

$S_B, P_B, I_B, n$

P

20

| $r_0$ |

$r_0, P_A, I_A$

21

| $K_B = f(P_A, I_A, S_B, n)$ |

| $Z_0 = h(r_0, K_B)$ |

22

$Z_0, P_B, I_B$

| $K_A = f(P_B, I_B, S_A, n)$ | 23

| $Z_0' = h(r_0, K_A)$ | 24

25

$Z_0' = Z_0$ ?

N → FAULT

O

ACK

26

| $r_1$ |

$r_1$

| WD = WM ( DATA, $r_1$, $K_A$) | 27

WD

28

| $r_1' = WM^{-1}(WD, K_B)$ |

29

$r_1' = r_1$ ?

N → FAULT

O

OK

Fig 3